(19) Europäisches Patentamt / European Patent Office / Office européen des brevets

(11) **EP 2 109 908 B1**

(12) **EUROPEAN PATENT SPECIFICATION**

(45) Date of publication and mention
of the grant of the patent:
**08.10.2014 Bulletin 2014/41**

(21) Application number: **06835555.1**

(22) Date of filing: **28.12.2006**

(51) Int Cl.:
*C09C 1/30* (2006.01)      *C09C 1/36* (2006.01)
*C09C 1/06* (2006.01)      *C09C 1/40* (2006.01)
*C09C 1/56* (2006.01)      *C09C 1/00* (2006.01)
*H01M 8/02* (2006.01)      *H01M 8/10* (2006.01)

(86) International application number:
**PCT/KR2006/005855**

(87) International publication number:
**WO 2008/075813 (26.06.2008 Gazette 2008/26)**

(54) **HYDROPHILIC INORGANIC AGGREGATE, ITS PREPARATION PROCESS, HYDROPHILIC COMPOSITE MATERIAL AND BIPOLARPLATE FOR FUEL CELL COMPRISING IT**

HYDROPHILES ANORGANISCHES AGGREGAT, PROZESS ZU SEINER HERSTELLUNG, HYDROPHILES VERBUNDMATERIAL UND BIPOLARPLATTE FÜR EINE BRENNSTOFFZELLE DAMIT

AGRÉGAT INORGANIQUE HYDROPHILE ET SON PROCÉDÉ DE PRÉPARATION, MATÉRIAU COMPOSITE HYDROPHILE ET PLAQUE BIPOLAIRE POUR PILE À COMBUSTIBLE CONTENANT CET AGRÉGAT

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.12.2006 KR 20060131388**

(43) Date of publication of application:
**21.10.2009 Bulletin 2009/43**

(73) Proprietor: **CHEIL INDUSTRIES INC.**
**Gumi-si**
**Gyungsangbuk-do**
**730-710 (KR)**

(72) Inventors:
• **KIM, Sung Jun**
**Gyeonggi-do 431-065 (KR)**
• **HONG,Chang Min**
**Gyeonggi-do 437-070 (KR)**

(74) Representative: **Bublak, Wolfgang**
**Bardehle Pagenberg Partnerschaft mbB**
**Patentanwälte, Rechtsanwälte**
**Prinzregentenplatz 7**
**81675 München (DE)**

(56) References cited:
**WO-A2-2005/090486**      **JP-A- 5 213 611**
**JP-A- 8 259 838**      **JP-A- 05 213 611**
**JP-A- 2002 100 367**      **JP-A- 2002 324 557**
**JP-A- 2004 244 599**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to a hydrophilic inorganic aggregate, a hydrophilic composite comprising the same, a fuel cell bipolar plate comprising the same, and a method for preparing the same. More specifically, the present invention relates to a hydrophilic inorganic aggregate and a method for preparing the hydrophilic inorganic aggregate which are suitable for use in the production of a fuel cell bipolar plate with improved electrical conductivity and hydrophilicity. Furthermore, the present invention relates to a hydrophilic composite and a fuel cell bipolar plate, each comprising the hydrophilic inorganic aggregate.

[Background Art]

Fuel cells are an electric generating system which directly converts chemical energy into electrical energy via an electrochemical reaction between hydrogen ($H_2$) contained in a hydrocarbon material, such as methanol or natural gas, and oxygen ($O_2$) in air. Fuel cells are a high-efficient clean energy converter that uses electricity generated by the electrochemical reaction between a fuel gas and an oxidizing gas, and heat as a by-product thereof, without any combustion. Fuel cells have attracted considerable attention as a next-generation energy source owing to their advantages of high-efficient energy conversion, and environment-friendliness, i.e., being free from contaminants.

Such a fuel cell, for example, Polymer electrolyte membrane fuel cell (PEMFC) may include a membrane-electrode assembly consisting of a polymeric electrolyte membrane, also called as a ""Proton exchange membrane", and each anode and cathode gas diffusion layer as a electrode arranged at opposite sides of the polymer electrolyte membrane. Also, the fuel cell may include fuel cell anode and cathode bipolar plates respectively deposited on the opposite sides (i.e. the positive and negative electrodes) of the membrane-electrode assembly.

The main operation mechanism of the fuel cell will be described hereinafter.

A fuel gas, including hydrogen ($H_2$), is supplied from a gas flow channel in the anode bipolar plate. Hydrogen ($H_2$), acting as the fuel gas, loses electrons in the positive electrode and becomes hydrogen ions. The hydrogen ions move through the polymeric electrolytic membrane to the cathode. The electrons released from hydrogen are also introduced into the negative electrode via an external circuit. Meanwhile, an oxidizing gas, including oxygen ($O_2$), is supplied from a gas flow channel in the negative bipolar plate. The oxidizing gas is reduced by the electrons to become an oxygen ion ($O^{2-}$). The oxygen ion reacts with the hydrogen ions ($H^+$) introduced into the negative electrode via the polymeric electrolytic membrane to generate water ($H_2O$). This water, together with the remaining oxidizing gas, is discharged through the gas flow channel in the negative bipolar plate. In the process of repeated electrochemical reactions, electrons flow through the external circuit, thereby generating electricity.

In the fuel cell, the bipolar plates, which are one of the electrically conductive plates, transport fuel gas, oxidizing gas, and electrons and water generated by the electrochemical reaction. In addition, the bipolar plates support the overall fuel cell stack. It has been known that the bipolar plates must have a desired level of electrical conductivity and flexural strength.

To ensure favorable movement of hydrogen ions generated at the positive electrode, the humidity of hydrogen ions must be continuously adjusted to the desired level. In addition, humidity of the polymeric electrolyte membrane must be maintained to the desired level. To maintain the humidity, hydrophilization of bipolar plates may favorably affect the ionic conductivity of hydrogen. The polymeric electrolyte membrane has a disadvantage of vulnerability to heat. Accordingly, in a case where a fuel cell is operated at a relatively high temperature, a bipolar plate of the fuel cell, in addition to a polymeric electrolyte membrane thereof, is preferably hydrophilized to protect the polymeric electrolyte membrane against the high temperature.

In a case where an electrically-polarized fuel gas is transferred through the gas flow channel in the bipolar plate, the fuel gas, polar water, and a residual ionomer derived from the polymer made of the bipolar plate conglomerate together, thus causing an elevation in fluid flow resistance of the flow channel, i.e., "water slugs". The water slugs induce formation of precipitates, thus allowing the flow channel to be blocked. However, the hydrophilization of bipolar plates induces formation of a thin water-film on the surface of the flow channel, and thus prevents the water slugs from occurring. In the hydrophilized bipolar plates, moisture in hydrogen ions introduced from the positive electrode is formed into water drops on the negative electrode, thereby inhibiting a waterdrop effect obstructing the flow of oxidizing gas, and enabling water to be favorably discharged through the gas flow channel in the negative bipolar plate due to the water-film formation.

Based on the above-mentioned advantages, there have been repeated attempts and research associated with hydrophilization of a bipolar plate. Of these, a simple addition of a hydrophilic inorganic material to a bipolar plate has been suggested. In this case, the addition of the inorganic material causes a deterioration in the electrical conductivity of the bipolar plate. Also, the use of carbon black surface-modified with a hydrophilic organic material, e.g., sulfonic acid, in a bipolar plate has been suggested. However, this bipolar plate makes it difficult to ensure chemical stability of the hydrophilic inorganic material inside a fuel cell in which a series of oxidations and reductions continuously occur. As time goes by, the hydrophilic inorganic material undergoes separation from the carbon black, or chemical variation, thus causing a deterioration in hydrophilicity or electrical conductivity of the bipolar plate.

Patent document JP 2004-244599 A discloses modified carbon black particle powder, its manufacturing method, and coating material and resin composition containing it. The carbon black particle adhered, to its surface, with ultrafine particles of an oxide or an hydroxide containing one or more elements selected from Zr, Ti and Ce is obtained by adding an aqueous solution containing one or more elements selected from Zr, Ti and Ce to an aqueous suspension containing carbon black particles to precipitate rapidly, filtrating the carbon black particles together with ultrafine particles of an oxide or an hydroxide to obtain a mixture comprising the carbon black and ultrafine particles, and compacting and crushing the mixture to cause the ultrafine particles to adhere to the surface of the carbon black particles.

Patent document JP 08-259838 A discloses nonelectroconductive carbonaceous powder and its production. Herein, at least a part of the surface of one or more kinds of graphite, carbon black and short fibre of carbon fibre is coated using a binder by one or more kinds of a hydrolysate or a partial hydrolysate of a metal compound, inorganic compound fine particles and mixture thereof and the resultant dispersion is filtered and cleaned to provide the objective carbonaceous powder capable of excluding electroconductivity of carbonaceous powder and imparting insulating property to a coating film and useful for colouring of printed circuit board, shadow mask of cathode-ray tube, block matrix, etc., of liquid crystal colour filter.

Patent document WO 2005/090486 A2 discloses the use of modified carbon products and metal-functionalised modified carbon products in applications such as catalysis, electronic and ionic conduction, adsorption, heat transfer and luminescence. The modified carbon product includes a functional group covalently attached to a carbon surface and a metal group attached to the functional group.

Patent document JP 05-213611 discloses a treatment of graphitic powder and graphite powder for making them hydrophilic. Herein, hydrophilic fine particles of a metal oxide, metal carbide, metal nitride, metal boride or metal are prepared and natural flaky graphite as graphite particles is mixed with the hydrophilic fine particles. This powdery mixture is blown into a high-speed flor of gas, bombardment treatment is carried out and the hydrophilic fine particles are stuck to the surfaces of the graphite particles.

[Technical Solution]

In accordance with one aspect of the present invention, there is provided a hydrophilic inorganic aggregate comprising: hybrid particles having a structure in which carbon black particles are embedded on the surface of hydrophilic inorganic particles; wherein the carbon black particles have a diameter 1/500 to 1/10 of the diameter of the hydrophilic inorganic particles.

In the hydrophilic inorganic aggregate, the hydrophilic inorganic material may be selected from the group consisting of zirconium dioxide, titanium dioxide, silicon dioxide, aluminum oxide, and a mixture thereof.

In accordance with another aspect of the present invention, there is provided a method for producing a hydrophilic inorganic aggregate, the method comprising forming hybrid particles, such that carbon black particles are embedded on the surface of hydrophilic inorganic particles, by applying physical force to the carbon black particles on the surface of the hydrophilic inorganic particles; wherein the carbon black particles have a diameter 1/500 to 1/10 of the diameter of the hydrophilic inorganic particles.

In the production of the hydrophilic inorganic aggregate, the formation of the hybrid particles may be carried out by particle-hybridization between the hydrophilic inorganic particle and the carbon black particles.

In accordance with another aspect of the present invention, there is provided a hydrophilic composite comprising: a resin binder consisting of a thermoplastic or thermosetting resin; a conductive filler; and the hydrophilic inorganic aggregate according to one aspect of the present invention.

The hydrophilic composite may consist of: 1 to 45% by weight of the resin binder; 50 to 98% by weight of the conductive filler; and 0.5 to 45% by weight of the hydrophilic inorganic aggregate.

In the hydrophilic composite, the thermoplastic resin may be selected from the group consisting of polyvinylidene fluoride, polycarbonate, nylon, polytetrafluoro ethylene, polyurethane, polyester, polyethylene, polypropylene, polyphenylene sulfide, and a mixture thereof, and the thermosetting resin may be selected from epoxy and phenol resins.

The conductive filler may be one carbonic material selected from the group consisting of carbon black, carbon fiber, carbon nanotubes, graphite, and a mixture thereof.

In accordance with another aspect of the present invention, there is provided a fuel cell bipolar plate produced from the hydrophilic composite according to another aspect of the present invention.

In accordance with yet another aspect of the present invention, there is provided a fuel cell bipolar plate comprising: a resin matrix made of a thermoplastic or thermosetting resin; a conductive filler dispersed in the resin matrix; and the hydrophilic inorganic aggregate according to one aspect of the present invention dispersed in the resin matrix.

Details of other aspects and exemplary embodiments of the present invention are encompassed in the following detailed description.

[Description of Drawings]

The above and other aspects, features and other advantages of the present invention will be more clearly understood from the following detailed description taken in conjunction with the accompanying drawing, in which:

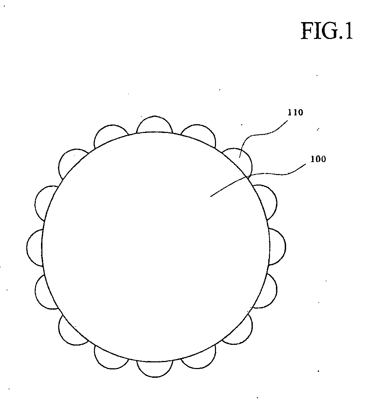

FIG. 1 is a schematic diagram illustrating the structure of a hybrid particle contained in a hydrophilic inorganic aggregate according to one embodiment of the present invention.

[Best Mode]

Now, exemplary embodiments of the present invention will be described in more detail with reference to accompanying drawing, such that those skilled in the art can easily practice the present invention. These embodiments are provided only for illustrating the present invention and should not be construed as limiting the scope and spirit of the present invention as disclosed in the accompanying claims.

Referring to FIG. 1, a hydrophilic inorganic aggregate according to one embodiment of the present invention comprises a hybrid particle having a structure in which carbon black particles 110 are embedded on the surface of a hydrophilic inorganic particle 100; wherein the carbon black particles have a diameter 1/500 to 1/10 of the diameter of the hydrophilic inorganic particles.

FIG. 1 illustrating the structure of the hybrid particle, in which carbon black particles 110 are embedded on the surface of the hydrophilic inorganic particle 100, is given only for an illustrative purpose. That is to say, there is no limitation as to the embedment method of carbon black particles 110. More specifically, hybrid particles may be made by which carbon black particles are embedded on the surface of the hydrophilic inorganic particles by means of any method depending upon the shape and type of carbon black particles. For example, carbon black particles,are partly or entirely coated on the surface of the hydrophilic inorganic particles.

The hydrophilic inorganic aggregate comprises hybrid particles, in which electrically conductive carbon black particles 110 are embedded on the surface of hydrophilic inorganic particles 100. In the case where the hydrophilic inorganic aggregate is used in a fuel cell bipolar plate, the hydrophilic inorganic aggregate enables an improvement in hydrophilicity while causing no deterioration in electrical conductivity. In addition, the embedment of the carbon black particles 110 on the surface of the hydrophilic inorganic particles 100 ensures strong binding between two components, and enables the hydrophilic inorganic particles, which are hardly affected by oxidation and reduction, to be chemically stable inside the fuel cell. Accordingly, the use of the hydrophilic inorganic aggregate ensures a stable improvement in electrical conductivity as well as hydrophilicity of the fuel cell bipolar plate.

In the hydrophilic inorganic aggregate, the hydrophilic inorganic material is selected from the group consisting of zirconium dioxide, titanium dioxide, silicon dioxide, aluminum oxide, and a mixture thereof. There is no limitation as to the inorganic material that can be used in the hydrophilic inorganic aggregate. Any inorganic material may be used without particular limitation so long as it is well-known to be hydrophilic and considerably chemically stable.

Since the carbon black particles 110 must be embedded on the surface of the hydrophilic inorganic particles 100, they have a diameter smaller than that of the hydrophilic inorganic particle 100. The carbon black particles 110 have a diameter 1/500 to 1/10 of the diameter of the hydrophilic inorganic particle 100. For example, the carbon black particles 110 have a diameter of 10 nm to 100 $\mu$m.

In accordance with another embodiment of the present invention, there is provided a method for producing a hydrophilic inorganic aggregate, the method comprising the step of forming hybrid particles, such that carbon black particles are embedded on the surface of hydrophilic inorganic particles, by applying physical force to the carbon black particles on the surface of the hydrophilic inorganic particles; wherein the carbon black particles have a diameter 1/500 to 1/10 of the diameter of the hydrophilic inorganic particles.

In the production of the hydrophilic inorganic aggregate, the hybrid particles, where carbon black particles are embedded on the surface of the hydrophilic inorganic particles, are formed by particle-hybridization between the hydrophilic inorganic particle and the carbon black particles. Such particle-hybridization embeds the carbon black particles on the surface of the hydrophilic inorganic particles by applying physical pressing or shearing force on the surface of the hydrophilic inorganic particles. Examples of the particle-hybridization include, but not limited to: particle-hybridization via airflow disclosed in US Patent No. 6,892,475; and particle-hybridization via a blade disclosed in US Patent No. 4,789,105. Each of these US Patents discloses specific means and apparatus for practicing the particle-hybridization. These well-known particle-hybridizations may be employed in the production of the hydrophilic inorganic aggregate comprising hybrid particles, where carbon black particles are embedded on the surface of the hydrophilic inorganic particles, according to another embodiment of the present invention.

Any well-known particle-hybridization may be employed without particular limitation so long as it is applicable to embedment of carbon black particles on the surface of the hydrophilic inorganic particles via application of physical force.

Constituent components of the hydrophilic inorganic aggregate produced in accordance with the fore-mentioned method are the same as described above.

In accordance with another embodiment of the present invention, there is provided a hydrophilic composite comprising: a resin binder consisting of a thermoplastic or thermosetting resin; a conductive filler; and the hydrophilic inorganic aggregate according to one embodiment of the present invention.

The hydrophilic composite comprises the hydrophilic inorganic aggregate, in addition to the conductive filler. In the case where such a hydrophilic composite is used in a fuel cell bipolar plate, the hydrophilic composite can exhibit sufficient electrical conductivity. The inclusion of the hydrophilic inorganic aggregate in the hydrophilic composite enables an improvement in hydrophilicity while causing no deterioration in the electrical conductivity upon application in the production of the fuel cell bipolar plate. In addition, the hydrophilic inorganic particle can be chemically stable in the fuel cell where a series of oxidations and reductions continuously occur. Accordingly, the use of the hydrophilic composite can achieve a favorable improvement in electrical conductivity as well as hydrophilicity of the fuel cell bipolar plate.

The hydrophilic composite consists of 1 to 45% by weight of the resin binder, 50 to 98% by weight of the conductive filler; and 0.5 to 45% by weight of the hydrophilic inorganic aggregate. The use of each constituent component of hydrophilic composite in an amount within the range as defined, imparts the desired characteristics, i.e., electrical conductivity and hydrophilicity, to the fuel cell bipolar plate.

In the hydrophilic composite, the thermoplastic resin is selected from the group consisting of polyvinylidene fluoride, polycarbonate, nylon, polytetrafluoro ethylene, polyurethane, polyester, polyethylene, polypropylene, polyphenylene sulfide, and a mixture thereof. The thermosetting resin is selected from epoxy and phenol resins. There is no limitation as to the thermoplastic and thermosetting resins that can be used in the hydrophilic composite. Any thermoplastic or thermosetting resin may be used without particular limitation so long as it is well-known to be applicable as a resin matrix of a fuel cell bipolar plate.

The conductive filler imparts the desired electrical conductivity i.e., 75 to 100 S/cm, to the fuel cell bipolar plate. Any conductive filler may be used without particular limitation so long as it is well-known to be applicable to a fuel cell bipolar plate. More specifically, the conductive filler may be a carbonic conductive filler or a metallic filler. The carbonic conductive filler is selected from the group consisting of carbon black, carbon fiber, carbon nanotubes, graphite, and a mixture thereof.

In accordance with another embodiment of the present invention, there is provided a fuel cell bipolar plate produced from the hydrophilic composite according to another embodiment of the present invention. The fuel cell bipolar plate consists of a resin matrix made of a thermoplastic or thermosetting resin; and a conductive filler and the hydrophilic inorganic aggregate according to one embodiment of the present invention, each being dispersed in the resin matrix.

The fuel cell bipolar plate has the desired hydrophilicity, while undergoing no deterioration in electrical conductivity, owing to uniform dispersion of the hydrophilic inorganic aggregate. The hydrophilicity of the fuel cell bipolar plate is caused by fine pores formed around the hydrophilic inorganic aggregate. In addition, chemical stability of the hydrophilic inorganic aggregate enables maintenance of the hydrophilicity and electrical conductivity of the fuel cell bipolar plate. Therefore, the fuel cell bipolar plate exhibits improved hydrophilicity and electrical conductivity. These characteristics can be stably maintained.

The fuel cell bipolar plate may be obtained in accordance with conventional methods for producing a resin-based bipolar plate. More specifically, the fuel cell bipolar plate may be produced by hardening the resin binder via heating of the hydrophilic composite. In the production of the fuel cell bipolar plate, a hot press, etc., may be used.

A full detail for the thermoplastic resin, thermosetting resin, and conductive filler that can be contained in the fuel cell bipolar plate is the same as described above.

[Mode for Invention]

The present invention will be better understood from the following examples. However, these examples are not to be construed as limiting the scope of the invention.

EXAMPLES

A thermoplastic resin, a conductive filler, and a hydrophilic inorganic aggregate were used in an amount shown in Tables 1 and 2, to produce each fuel cell bipolar plate of the following Examples 1 to 6 and Comparative Examples 1 to 7.

(1) Thermoplastic resin

A polyphenylene sulfide resin (PPS) was used as a thermoplastic resin to form a resin matrix of the fuel cell bipolar plate. The polyphenylene sulfide used herein was Ryton PR-11® (available from Chevron Phillips Chemical (CPC) Company, LLC.) having a zero viscosity of 300 P measured under nitrogen atmosphere at 315.5°C.

(2) Conductive filler

Artificial graphite (average diameter: 100 $\mu$m) was used as a carbonic conductive filler of the fuel cell bipolar plate.

(3) Hydrophilic inorganic aggregate

There was used a hydrophilic inorganic aggregate comprising hybrid particles, in which nano-scale carbon black particles are embedded on the surface of micro-scale titanium dioxide particles. The nano-scale carbon black particles had a surface area of 70 $m^2$/g measured in accordance with ASTM D3037-89, and an average diameter of 35 nm after exposure to ultrasonic wave emitted from an ultrasonic emitter for 10 min. The micro-scale titanium dioxide particles had an average diameter of 5.3 $\mu$m obtained from controlled hydrolysis of titanium tetra-isopropoxide in accordance with the method disclosed in J. Phys. Chem. 98 (1994) 1366.

The production of hybrid particles was based on the particle-hybridization disclosed in US Patent No. 6,892,475.

Respective constituent components (1) to (3) were mixed together based on the content shown in Tables 1 and 2 to prepare a hydrophilic composite. At this time, in Comparative Examples 2 to 4, there was used conventional carbon black without undergoing any embedment on the surface of the hydrophilic inorganic particles. In Comparative Examples 5 to 7, titanium dioxide was used alone. A haake mixer was used in the preparation of hydrophilic composite. Then, fuel cell bipolar plates of Examples 1 to 6 and Comparative Examples 1 to 7 were produced from hydrophilic composites by means of a hot press.

The electrical conductivity of each fuel cell bipolar plate was measured by 4-pin probe. The hydrophilicity of each fuel cell bipolar plate was evaluated on the basis of water uptake (W). A sample of each fuel cell bipolar plate was dried on an oven at 80°C for 12 hours, following by weighing ($W_1$). Subsequently, the sample of each fuel cell bipolar plate was dipped into water at 25 °C for 8 hours, following by weighing ($W_2$). The water uptake was calculated by dividing the difference between $W_1$ and $W_2$ by $W_1$, in terms of percentage (%) by weight, which is demonstrated by Equation 1 below:

$$W\ (\%)\ =\ 100\ \cdot\ (W_2\ -\ W_1)\ /\ W_1\ \ --------\ (1)$$

The electrical conductivity and water uptake for respective bipolar plates measured are shown in Tables 1 and 2.

**TABLE 1**

|  | Ex. | | | | | |
|---|---|---|---|---|---|---|
|  | 1 | 2 | 3 | 4 | 5 | 6 |
| Thermoplastic resin (wt. %) | 25 | 25 | 25 | 25 | 25 | 25 |
| Conductive filler (wt. %) | 70 | 65 | 60 | 70 | 65 | 60 |
| Hydrophilic inorganic aggregate A[1] (wt. %) | 5 | 10 | 15 | - | - | - |
| Hydrophilic inorganic aggregate B[2] (wt. %) | - | - | - | 5 | 10 | 15 |
| Electrical conductivity (S/cm) | 99 | 113 | 117 | 94 | 83 | 71 |
| Water intake (wt.%) | 7.3 | 8.2 | 9.1 | 7.5 | 8.9 | 10.7 |
| 1) Hydrophilic inorganic aggregate A - carbon black particles: titanium dioxide particles = 1:1 (w/w)<br>2) Hydrophilic inorganic aggregate B - carbon black particles : titanium dioxide particles = 1:2 (w/w) | | | | | | |

TABLE 2

| | Comp. Ex. | | | | | | |
|---|---|---|---|---|---|---|---|
| | 1 | 2 | 3 | 4 | 5 | 6 | 7 |
| Thermoplastic resin (wt. %) | 25 | 25 | 25 | 25 | 25 | 25 | 25 |
| Conductive filler (wt. %) | 75 | 70 | 65 | 60 | 72.5 | 70 | 67.5 |
| Carbon black (wt. %) | - | 5 | 10 | 15 | - | - | - |
| Titanium dioxide (wt. %) | - | - | - | - | 2.5 | 5 | 7.5 |
| Electrical conductivity (S/cm) | 103 | 115 | 123 | 110 | 83 | 68 | 41 |
| Water intake (wt. %) | 6.0 | 5.8 | 6.2 | 5.5 | 6.8 | 7.9 | 8.4 |

As can be seen from the data in Tables 1 and 2, the bipolar plates of Examples 1 to 6, in which each hydrophilic inorganic aggregate was contained, exhibited improved hydrophilicity, while hardly undergoing any deterioration in electrical conductivity. Meanwhile, it could be confirmed that the bipolar plates of Examples 1 to 6 exhibited considerably improved hydrophilicity, while undergoing slight deterioration in electrical conductivity, when compared to the bipolar plates of Comparative Examples 5 to 7, in which a hydrophilic inorganic material (*e.g.*, titanium dioxide) was used alone.

**Claims**

1. A hydrophilic inorganic aggregate comprising:

   hybrid particles having a structure in which carbon black particles are embedded on the surface of hydrophilic inorganic particles; wherein the carbon black particles have a diameter 1/500 to 1/10 of the diameter of the hydrophilic inorganic particles.

2. The hydrophilic inorganic aggregate according to claim 1, wherein the hydrophilic inorganic material is selected from the group consisting of zirconium dioxide, titanium dioxide, silicon dioxide, aluminum oxide, and a mixture thereof.

3. A method for producing a hydrophilic inorganic aggregate, the method comprising:

   forming hybrid particles, such that carbon black particles are embedded on the surface of hydrophilic inorganic particles, by applying physical force to the carbon black particles on the surface of the hydrophilic inorganic particle; wherein the carbon black particles have a diameter 1/500 to 1/10 of the diameter of the hydrophilic inorganic particles.

4. The method according to claim 3, wherein the formation of the hybrid particles is carried out by particle-hybridization between the hydrophilic inorganic particles and the carbon black particles.

5. The method according to claim 3, wherein the hydrophilic inorganic material is selected from the group consisting of zirconium dioxide, titanium dioxide, silicon dioxide, aluminum oxide, and a mixture thereof.

6. A hydrophilic composite comprising:

   a resin binder consisting of a thermoplastic or thermosetting resin;
   a conductive filler; and
   the hydrophilic inorganic aggregate according to claim 1.

7. The hydrophilic composite according to claim 6, wherein the hydrophilic composite consists of:

   1 to 45% by weight of the resin binder;
   50 to 98% by weight of the conductive filler; and
   0.5 to 45% by weight of the hydrophilic inorganic aggregate.

8. The hydrophilic composite according to claim 6, therein the thermoplastic resin is selected from the group consisting of polyvinylidene fluoride, polycarbonate, nylon, polytetrafluoro ethylene, polyurethane, polyester, polyethylene, polypropylene, polyphenylene sulfide, and a mixture thereof, and the thermosetting resin is selected from epoxy and phenol resins.

9. The hydrophilic composite according to claim 6, wherein the conductive filler is one carbonic material selected from the group consisting of carbon black, carbon fiber, carbon nanotubes, graphite, and a mixture thereof.

10. A fuel cell bipolar plate produced from the hydrophilic composite according to claim 6.

11. A fuel cell bipolar plate comprising:

   a resin matrix made of a thermoplastic or thermosetting resin;
   a conductive filler dispersed in the resin matrix; and
   the hydrophilic inorganic aggregate according to claim 1 dispersed in the resin matrix.

12. The fuel cell bipolar plate according to claim 11, wherein the thermoplastic resin is selected from the group consisting of polyvinylidene fluoride, polycarbonate, nylon, polytetrafluoro ethylene, polyurethane, polyester, polyethylene, polypropylene, polyphenylene sulfide, and a mixture thereof, and the thermosetting resin is selected from epoxy and phenol resins.

13. The fuel cell bipolar plate according to claim 11, wherein the conductive filler is one carbonic material selected from the group consisting of carbon black, carbon fiber, carbon nanotubes, graphite, and a mixture thereof.

**Patentansprüche**

1. Hydrophiles anorganisches Aggregat, umfassend:

   Hybridteilchen mit einer Struktur, in der Rußteilchen auf der Oberfläche hydrophiler anorganischer Teilchen eingebettet sind;
   wobei die Rußteilchen einen Durchmesser von 1/500 bis 1/10 des Durchmessers der hydrophilen anorganischen Teilchen aufweisen.

2. Hydrophiles anorganisches Aggregat nach Anspruch 1, wobei das hydrophile anorganische Material aus der Gruppe bestehend aus Zirconiumdioxid, Titandioxid, Siliciumdioxid, Aluminiumoxid, und einem Gemisch davon ausgewählt ist.

3. Verfahren zur Herstellung eines hydrophilen anorganischen Aggregats, wobei das Verfahren umfasst:

   Bilden von Hybridteilchen, dergestalt, dass Rußteilchen auf der Oberfläche von hydrophilen anorganischen Teilchen eingebettet werden, in dem eine physikalische Kraft auf die Rußteilchen auf der Oberfläche des hydrophilen anorganischen Teilchens ausgeübt wird; wobei die Rußteilchen einen Durchmesser von 1/500 bis 1/10 des Durchmessers der hydrophilen anorganischen Teilchen aufweisen.

4. Verfahren nach Anspruch 3, wobei die Bildung der Hybridteilchen durch Teilchen-Hybridisierung zwischen den hydrophilen anorganischen Teilchen und den Rußteilchen durchgeführt wird.

5. Verfahren nach Anspruch 3, wobei das hydrophile anorganische Material aus der Gruppe bestehend aus Zirconiumdioxid, Titandioxid, Siliciumdioxid, Aluminiumoxid und einem Gemisch davon ausgewählt wird.

6. Hydrophiler Verbundstoff, umfassend:

   ein Harzbindemittel, bestehend aus einem Thermoplast- oder Duroplast-Harz;
   einen leitenden Füllstoff; und
   das hydrophile anorganische Aggregat gemäß Anspruch 1.

7. Hydrophiler Verbundstoff nach Anspruch 6, wobei der hydrophile Verbundstoff besteht aus:

1 bis 45 Gewichts-% des Harzbindemittels;
50 bis 98 Gewichts-% des leitenden Füllstoffs; und
0,5 bis 45 Gewichts-% des hydrophilen anorganischen Aggregats.

8. Hydrophiler Verbundstoff nach Anspruch 6, wobei das Thermoplast-Harz ausgewählt ist aus der Gruppe bestehend aus Polyvinylidenfluorid, Polycarbonat, Nylon, Polytetrafluorethylen, Polyurethan, Polyester, Polyethylen, Polypropylen, Polyphenylensulfid, und einem Gemisch davon, und das Duroplast-Harz aus Epoxy- und Phenol-Harzen ausgewählt ist.

9. Hydrophiler Verbundstoff nach Anspruch 6, wobei der leitende Füllstoff ein kohlenstoffhaltiges Material ausgewählt aus der Gruppe bestehend aus Ruß, Kohlenstofffaser, Kohlenstoffnanoröhrchen, Graphit und einem Gemisch davon ist.

10. Brennstoffzellen-Bipolarplatte, hergestellt aus dem hydrophilen Verbundstoff gemäß Anspruch 6.

11. Brennstoffzellen-Bipolarplatte, umfassend:

eine Harzmatrix, hergestellt aus einem Thermoplast- oder Duroplast-Harz;
einen leitenden Füllstoff, dispergiert in der Harzmatrix; und
das hydrophile anorganische Aggregat gemäß Anspruch 1, dispergiert in der Harzmatrix.

12. Brennstoffzellen-Bipolarplatte nach Anspruch 11, wobei das thermoplastische Harz ausgewählt ist aus der Gruppe bestehend aus Polyvinylidenfluorid, Polycarbonat, Nylon, Polytetrafluorethylen, Polyurethan, Polyester, Polyethylen, Polypropylen, Polyphenylensulfid, und einem Gemisch davon, und das Duroplast-Harz aus Epoxy- und Phenolharzen ausgewählt ist.

13. Brennstoffzellen-Bipolarplatte nach Anspruch 11, wobei der leitende Füllstoff ein kohlenstoffhaltiges Material ausgewählt aus der Gruppe bestehend aus Ruß, Kunststofffaser, Kunststoffnanoröhrchen, Graphit und einem Gemisch davon ist.


## Revendications

1. Un agrégat inorganique hydrophile comprenant :

des particules hybrides présentant une structure dans laquelle des particules de noir de carbone sont incluses sur la surface de particules inorganiques hydrophiles,
dans lequel les particules de noir de carbone présentent un diamètre de 1/500 à 1/10 du diamètre des particules inorganiques hydrophiles.

2. L'agrégat inorganique hydrophile de la revendication 1, dans lequel le matériau inorganique hydrophile est choisi dans le groupe formé par le dioxyde de zirconium, le dioxyde de titane, le dioxyde de silicium, l'oxyde d'aluminium et un mélange des précédents.

3. Un procédé de production d'un agrégat inorganique hydrophile, le procédé comprenant :

la formation de particules hybrides, de sorte que des particules de noir de carbone soient incluses à la surface de particules inorganiques hydrophiles, par application d'une force physique aux particules de noir de carbone sur la surface de la particule inorganique hydrophile,
dans lequel les particules de noir de carbone présentent un diamètre de 1/500 à 1/10 du diamètre des particules inorganiques hydrophiles.

4. Le procédé de la revendication 3, dans lequel la formation des particules hybrides est exécutée par hybridation de particules entre les particules inorganiques hydrophiles et les particules de noir de carbone.

5. Le procédé de la revendication 3, dans lequel le matériau inorganique hydrophile est choisi dans le groupe formé par le dioxyde de zirconium, le dioxyde de titane, le dioxyde de silicium, l'oxyde d'aluminium et un mélange des précédents.

**6.** Un composite hydrophile comprenant :

une résine liante consistant en une réside thermoplastique ou thermodurcissable ;
une charge conductrice ; et
l'agrégat inorganique hydrophile de la revendication 1.

**7.** Le composite hydrophile de la revendication 6, dans lequel le composite hydrophile consiste en :

1 à 45 % en poids de la résine liante ;
50 à 98 % en poids de la charge conductrice ; et
0,5 à 45 % en poids de l'agrégat inorganique hydrophile.

**8.** Le composite hydrophile de la revendication 6, dans lequel la résine thermoplastique est choisie dans le groupe formé par : polyfluorure de vinylidène, polycarbonate, nylon, polytétrafluoroéthylène, polyuréthanne, polyester, polyéthylène, polypropylène, polysulfure de phénylène et un mélange des précédents, et la résine thermodurcissable est choisie parmi les résines époxy et phénoliques.

**9.** Le composite hydrophile de la revendication 6, dans lequel la charge conductrice est un matériau carboné choisi dans le groupe formé par le noir de carbone, les fibres de carbone, les nanotubes de carbone, le graphite et un mélange des précédents.

**10.** Une plaque bipolaire de pile à combustible produite à partir du combustible hydrophile de la revendication 6.

**11.** Une plaque bipolaire de pile à combustible comprenant :

une matrice en résine formée d'une résine thermoplastique ou thermodurcissable ;
une charge conductrice dispersée dans la matrice en résine ; et
l'agrégat inorganique hydrophile de la revendication 1 dispersé dans la matrice en résine.

**12.** La plaque bipolaire de pile à combustible de la revendication 11, dans laquelle la résine thermoplastique est choisie dans le groupe formé par : polyfluorure de vinylidène, polycarbonate, nylon, polytétrafluoroéthylène, polyuréthanne, polyester, polyéthylène, polypropylène, polysulfure de phénylène et un mélange des précédents, et la résine thermodurcissable est choisie parmi les résines époxy et phénoliques.

**13.** La plaque bipolaire de pile à combustible de la revendication 11, dans laquelle la charge conductrice est un matériau carboné choisi dans le groupe formé par le noir de carbone, les fibres de carbone, les nanotubes de carbone, le graphite et un mélange des précédents.

FIG.1

**EP 2 109 908 B1**

**REFERENCES CITED IN THE DESCRIPTION**

**Patent documents cited in the description**

- JP 2004244599 A
- JP 8259838 A
- WO 2005090486 A2
- JP 5213611 A
- US 6892475 B
- US 4789105 A

**Non-patent literature cited in the description**

- *J. Phys. Chem.,* 1994, vol. 98, 1366